# EUROPÄISCHE PATENTSCHRIFT

(11) **EP 0 484 898 B1**
(45) Veröffentlichungstag und Bekanntmachung des Hinweises auf die Patenterteilung: **15.05.1996**
(21) Anmeldenummer: 91118898.5
(22) Anmeldetag: 06.11.1991
(51) Int. Cl.: G01S 1/14

(54) **Verfahren und Vorrichtung zur Bestimmung der relativen Ausrichtung von Fahrzeugen im Strassenverkehr**
Apparatus and method for determining the relative orientation of vehicles in traffic
Procédé et appareil pour déterminer l'orientation relative de véhicules circulants

(30) Priorität: 08.11.1990 DE 4035440
(43) Veröffentlichungstag der Anmeldung: 13.05.1992
(73) Patentinhaber: ROBERT BOSCH GMBH, 70442 Stuttgart (DE)
(72) Erfinder: Bode, Fr.-Wilhelm, Dipl.-Ing., W-3054 Apelern (DE); Fischer, Hans-Jürgen, Dr.-Ing., W-3200 Hildesheim (DE)

(56) Entgegenhaltungen:
- WO-A-82/02432
- US-A- 4 263 597
- US-A- 4 939 522

## Beschreibung

Die Erfindung betrifft ein Verfahren zur Bestimmung der relativen Ausrichtung von Fahrzeugen im Straßenverkehr, nach dem Oberbegriff des Anspruchs 1.

Im Zusammenhang mit der zunehmenden Verkehrsdichte im Straßenverkehr steigt auch die Unfallgefahr der Verkehrsteilnehmer. Durch Verfahren, die die Position, die Art und weitere Merkmale benachbarter Fahrzeuge erfassen, lassen sich Fahrzeugführern wichtige Informationen zugänglich machen, nach denen sie ihre Fahrweise anpassen und dadurch gefährliche Situationen vermeiden können. Eines dieser weiteren Merkmale ist die Ausrichtung benachbarter Fahrzeuge, aus der in Verbindung mit deren Position ermittelt werden kann, ob sich ein anderes Fahrzeug nähert, entfernt oder die eigene Richtung kreuzt.

Bei Fahrzeugen, die mit Funksendern zum Datenaustausch ausgestattet sind, besteht zwar die Möglichkeit, allgemeingültige Daten, wie Fahrzeugart, Gewicht oder Fahrgeschwindigkeit zu übertragen, Informationen über die Ausrichtung lassen sich aber nicht gewinnen und übertragen, da diese Informationen auch von den relativen Standorten, für die sie gültig sein sollen, abhängig sind.

Aus der WO 82/02432 ist ein Kollisionswarnsystem für Flugzeuge bekannt, bei dem jedes Flugzeug an seinen verschiedenen Enden Sende- und Empfangsantennen hat. Die Sendeantennen senden ein Signal, das mit dem Anbringungsort der Antenne am Flugzeug codiert ist und somit eine Schutzzone um das Flugzeug bilden. Berühren sich zwei Schutzzonen von sich nähernden Flugzeugen, dann kann aus der Überschneidung der Schutzzone und dem Empfang der entsprechenden Antennen die Position und die Flugrichtung der Flugzeuge bestimmt werden.

Aus der US 4,939,522 ist ein Verfahren und ein System zur Bestimmung der momentanen Fahrzeugposition sowie zur Führung der Fahrzeuge mit einem vorgegebenen Abstand bekannt. Bei dem System senden zwei voneinander entfernt angeordnete Rundfunksender sowohl ein Initialisierungssignal als auch ein Positionssignal. Die Fahrzeuge haben entsprechende Empfänger, wobei die Fahrtrichtung durch die Zeitverschiebung zwischen den beiden Signalen bestimmt wird.

Aus der US 4,263,597 ist ein Fahrtrichtungssystem bekannt, bei dem an einem Fahrzeug für jeden Quadrant eine Antenne zum Empfang eines Rundfunksignals angeordnet ist. Durch Vergleich der Phasenwinkel der von den Antennen empfangenen Signale wird die Fahrtrichtung des Fahrzeugs bestimmt.

Der Erfindung liegt die Aufgabe zugrunde, ein Verfahren zur Bestimmung der relativen Ausrichtung von Fahrzeugen im Straßenverkehr zu schaffen, bei dem die von den Fahrzeugen abgestrahlten Funksignale ausgewertet werden und von jedem im Umfeld der Fahrzeuge gelegenen Standort in eindeutiger Weise die Ermittlung dieser Ausrichtung möglich ist.

Diese Aufgabe wird bei einem Verfahren nach dem Oberbegriff des Anspruchs 1 durch die im kennzeichnenden Teil angegebenen Merkmale gelöst.

Durch die zyklisch verstärkte Ausstrahlung der Funksignale in unterschiedliche Richtungen besitzen die am Empfangsort einfallenden Funksignale unterschiedliche Feldstärken. Unter "verstärker Ausstrahlung" wird hier verstanden, daß die Ausstrahlung in eine Vorzugsrichtung stärker als in andere Richtungen ist. Dies schließt eine Variationsbreite ein, bei der im einen Extremfall eine Antenne nur geringfügig stärker strahlt als die anderen und bei der im anderen Extremfall nur eine Antenne strahlt und die anderen extrem stark gedämpft oder gar abgeschaltet sind.

Die größte Feldstärke ergibt sich dann, wenn die verstärkte Ausstrahlung genau in Richtung des Empfangsortes erfolgt. Aus der Messung der Feldstärke allein ist aber die Ausrichtung des sendenden Fahrzeugs noch nicht bestimmbar. Vielmehr wird noch eine Information dahingehend benötigt, in welche Richtung dieses die höchste Feldstärke erzeugende Funksignal vom Fahrzeug abgestrahlt wurde.

Diese Angabe ist in Richtungsinformationen enthalten, mit denen die Funksignale moduliert sind. Durch gemeinsame Auswertung der Empfangsfeldstärke zusammen mit den Richtungsinformationen gelingt es, die relative Ausrichtung des sendenden Fahrzeugs zu allen möglichen Standorten im Umfeld gleichzeitig eindeutig festzustellen. Durch Mittelwertbildung oder Interpolation zweier Empfangsfeldstärkewerte lassen sich Winkel der relativen Ausrichtung mit hinreichender Genauigkeit angeben.

Zweckmäßig werden die Funksignale nacheinander in vier Richtungen verstärkt abgestrahlt, und zwar nach vorn, zur rechten Seite, nach hinten und zur linken Seite. Die Richtungsinformationen könnten dann in kodierter Form zeitgleich mit der Abstrahlung in der jeweiligen Richtung übertragen werden.

Eine andere Alternative sieht hingegen vor, als Richtungsinformationen ein Synchronsignal zu übertragen, das einen Meßzyklus einleitet. Innerhalb dieses Meßzyklus wird dann in vorgegebener Reihenfolge und zu vorgegebenen Zeiten das Funksignal nacheinander in alle Abstrahlrichtungen verstärkt abgestrahlt. Der Vorteil dieser Maßnahme besteht darin, daß für die Übertragung der Richtungsinformationen weniger Übertragungskapazität benötigt wird und die gewonnene Übertragungskapazität dementsprechend anderen Daten zur Verfügung steht.

Die Erfindung betrifft ferner eine Vorrichtung zur Bestimmung der relativen Ausrichtung von Fahrzeugen im Straßenverkehr nach dem Oberbegriff des Anspruchs 9.

Diesbezüglich liegt ihr die Aufgabe zugrunde, eine Vorrichtung zur Bestimmung der relativen Ausrichtung von Fahrzeugen im Straßenverkehr zu schaffen, die die von den Fahrzeugen abgestrahlten Funksignale zur Auswertung ausnutzt und von jedem im Umfeld der Fahrzeuge gelegenen Standort in eindeutiger Weise die Ermittlung dieser Ausrichtung ermöglicht.

Diese Aufgabe wird bei einer Vorrichtung nach dem Oberbegriff des Anspruchs 9 durch die im kennzeichnenden Teil angegebenen Merkmale gelöst.

Weiterbildungen und vorteilhafte Ausgestaltungen des Verfahrens und der Vorrichtung ergeben sich aus den Ansprüchen, der weiteren Beschreibung und der Zeichnung, die ein Ausführungsbeispiel veranschaulicht.

In der Zeichnung zeigen:
- Fig. 1: ein Blockschaltbild einer zur Bestimmung der relativen Ausrichtung von Fahrzeugen geeigneten Vorrichtung,
- Fig. 2: ein erstes Zeitdiagramm, in dem die Abstrahlung von Funksignalen in mehrere Richtungen in einem Zeitschlitz erfolgt,
- Fig. 3: ein zweites Zeitdiagramm, in dem die Abstrahlung von Funksignalen in mehrere Richtungen in mehreren Zeitschlitzen erfolgt.

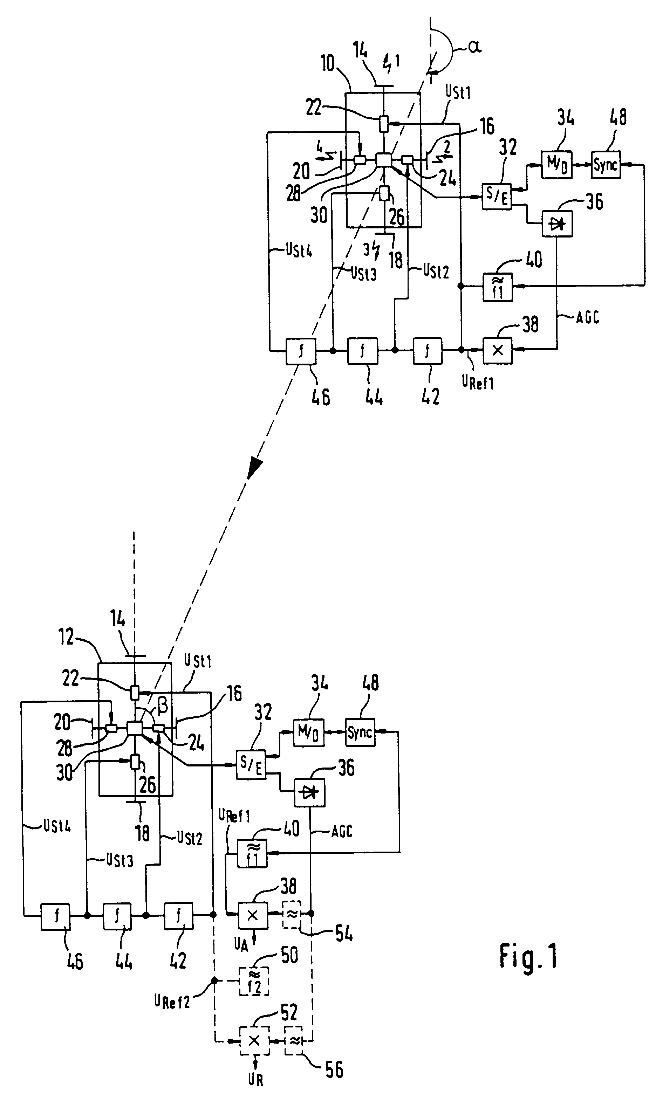

Fig. 1 zeigt ein Blockschaltbild einer zur Bestimmung der relativen Ausrichtung von Fahrzeugen geeigneten Vorrichtung. An zwei Fahrzeugen 10̸ und 12 sind jeweils vier Richtantennen 14, 16, 18, 20̸ angeordnet, und zwar eine erste Antenne 14 an der Vorderseite mit Strahlungsrichtung nach vorn, eine zweite Antenne 16 an der rechten Seite mit Strahlungsrichtung nach rechts, eine dritte Antenne 18 an der Rückseite mit Strahlungsrichtung nach hinten und eine vierte Antenne 20̸ an der linken Seite mit Strahlungsrichtung nach links. Alle vier Antennen 14, 16, 18, 20̸ schließen zu den benachbarten Antennen Winkelsegmente von 90̸ Grad ein und weisen in ihren Strahlungsdiagrammen Öffnungswinkel auf, die sich insgesamt zu einer Rundstrahlcharakteristik ergänzen. Die Antennen 14, 16, 18, 20̸ sind wechselweise als Sendeantennen und Empfangsantennen umschaltbar.

In den Antennenzuleitungen der Richtantennen 14, 16, 18, 20̸, die zu einem Verteilungsglied 30̸ führen, sind elektronisch steuerbare Dämpfungsglieder 22, 24, 26, 28 angeordnet. Das Verteilungsglied 30̸ seinerseits ist mit einem Sender-Empfänger 32 verbunden, bei dem es sich um einen für einen Datenaustausch vorgesehenen Sender-Empfänger handeln kann, der bereits über einen Modulator-Demodulator 34, z. B. einen FSK-Modulator-Demodulator für Datentelegramme verfügt. Der Empfängerteil des Sender-Empfängers 32 ist außerdem mit einem AM-Demodulator 36 verbunden, der eine Regelspannung AGC zur Regelung der Verstärkerstufen des Empfängerteils erzeugt.

Da die Regelspannung AGC ein Maß für die Antennenspannung am Eingang des Empfängerteils des Sender-Empfängers 32 darstellt, kann sie zur Ermittlung der Empfangsfeldstärke der einfallenden Funksignale ausgenutzt werden, indem sie einer Verknüpfungsschaltung 38 oder einem Vergleicher 38 zugeführt wird.

Bei der weiteren Erläuterung wird davon ausgegangen, daß das Fahrzeug 10̸ das sendende Fahrzeug und das Fahrzeug 12 das empfangende Fahrzeug darstellt. Hierdurch ergeben sich Unterschiede im Signalverlauf zwischen den Baugruppen, die in allen Fahrzeugen gleichartig ausgebildet sein können und zwischen Senden und Empfangen umschaltbar sind.

Im Fahrzeug 10̸ ist ein Oszillator 40̸ für die Frequenz f₁ vorgesehen, der eine Steuerspannung U_{St1} direkt bzw. über Zeitverzögerungsglieder 42, 44, 46 als U_{St2}, U_{St3} und U_{St4} den elektronisch steuerbaren Dämpfungsgliedern 22, 24, 26, 28 zuführt. Die Verzögerungszeiten 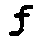 der Zeitverzögerungsglieder 42, 44, 46 sind so bemessen, daß sie entsprechend den Winkelsegmenten von 90̸ Grad zwischen den Antennen 14, 16, 18, 20̸ eine Phasenverschiebung der periodischen Oszillatorsteuerspannung von ebenfalls jeweils 90̸ Grad bewirken. Dadurch wird das erste Dämpfungsglied 22 direkt vom Oszillator 40̸ angesteuert, das zweite 24 mit einer um 90̸ Grad verschobenen Steuerspannung U_{St2}, das dritte 26 mit einer um 180̸ verschoben Steuerspannung U_{St3} und schließlich das vierte 28 mit einer um 270̸ Grad verschobenen Steuerspannung U_{St4}.

Bei Abstrahlung von Funksignalen ist die Steuerspannung ein Zeitsignal, welches die elektronisch steuerbaren Dämpfungsglieder 22, 24, 26, 28 periodisch steuert. Die Steuerspannung sorgt dafür, daß stets drei Antennen gedämpft sind, während nacheinander die erste 14, zweite 16, dritte 18 und vierte Antenne 20̸ gegenüber den gedämpften Antennen ungedämpft oder verstärkt abstrahlen. Dementsprechend werden die Funksignale in jedem Zyklus zeitlich nacheinander verstärkt nach vorn, zur rechten Seite, nach hinten und zur linken Seite abgestrahlt, wie die mit den Ziffern 1, 2, 3 und 4 versehenen Zick-zackPfeile an den Antennen 14, 16, 18 und 20̸ andeuten.

Aus der vom Oszillator 40 erzeugten Steuerspannung U_{St1} läßt sich auch eine Richtungsinformation gewinnen, indem z. B. die das Dämpfungsglied 22 steuernde Spannung gleichzeitig eine Synchronschaltung 48 startet, die ein Synchronwort zur Einleitung eines Meßzyklus über den Modulatorteil des Modulator-Demodulators 34 und den Senderteil des Sender-Empfängers 38 dem Funksignal aufmoduliert.

Als Ergebnis dieser Maßnahme wird also vom sendenden Fahrzeug 10̸ aus zuerst ein mit dem Synchronwort moduliertes Funksignal verstärkt nach vorn abgestrahlt. Danach erfolgt eine Abstrahlung eines Funksignals verstärkt nach rechts, nach hinten und nach links, und zwar zu Zeiten, die durch die Frequenz f₁ des Oszillators 40̸ vorgegeben sind. Wenn diese Reihenfolge und die Zeiten verbindlich festgelegt sind, kann von jedem Standort im Umfeld des sendenden Fahrzeugs dessen Ausrichtung bestimmt werden, sobald das Synchronwort richtig erkannt wurde.

Hierzu wird von den empfangenden Fahrzeugen, in Fig. 1 also von dem Fahrzeug 12 das Funksignal dem Empfangsteil des Sender-Empfängers 32 zugeführt. Nach Demodulation im Modulator-Demodulator 34 wird aus dem empfangenen Datenstrom in der Synchronschaltung 48 das Synchronwort ermittelt und der Oszillator 40̸ über eine Steuerleitung synchronisiert. Während des laufenden Meßzyklus wird nun die Empfangsfeldstärke des einfallenden Funksignals ermittelt, und zwar durch Auswertung der von der Empfangsfeldstärke abhängigen Regelspannung AGC.

Diese Auswertung erfolgt in der Verknüpfungsschaltung 38 bzw. dem Vergleicher 38 durch Vergleich der Regelspannung AGC mit der vom synchronisierten Oszillator 40̸ erzeugten Referenzspannung U_{Ref1}, z. B. in Form eines Phasenvergleichs. Hierbei ist sowohl ein Vergleich der analogen Signale als auch eine Digitalisierung der Spannungen mit anschließendem Vergleich der Phasen in einem Signalprozessor möglich. Das Ergebnis des Vergleichs ist schließlich ein Spannungswert U_{A} oder ein numerischer Wert, der ein Maß für die Ausrichtung des sendenden Fahrzeugs 10̸ relativ zum eigenen Standort, also dem Standort des Fahrzeugs 12 darstellt.

Bei der Position der Fahrzeuge 10̸ und 12 wird die Abstrahlung der Funksignale vom Fahrzeug 10̸ nach hinten beim Fahrzeug 12 ein große und nach links eine mittlere Empfangsfeldstärke auslösen. Die Abstrahlungen nach vorn und nach rechts führen nur zu geringen Empfangsfeldstärken. Bei der Auswertung ergibt sich dann eine relative Ausrichtung des Fahrzeugs 10̸ mit seiner linken hinteren Seite zum Fahrzeug 12 unter einem Winkel α.

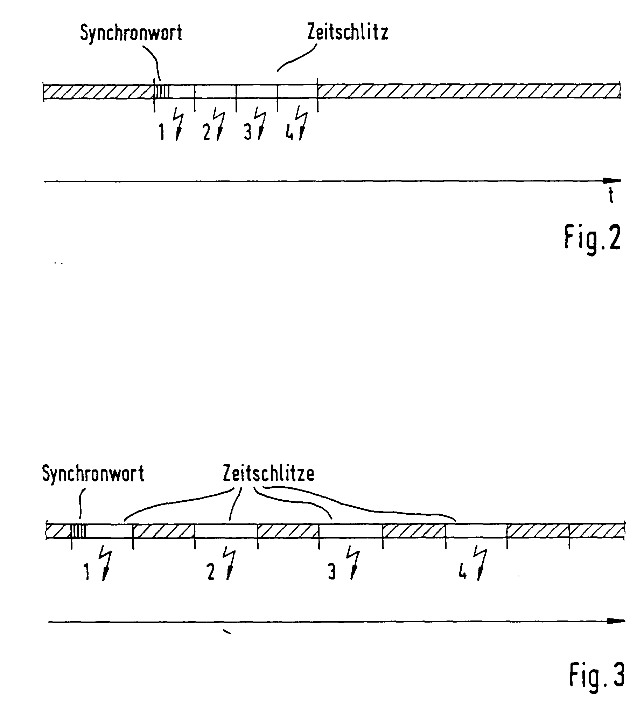

Damit ein Datenaustausch zwischen benachbarten Fahrzeugen störungsfrei verlaufen kann, sind den Fahrzeugen innerhalb eines bestimmten örtlichen Bereiches Zeitschlitze für die Aussendung eigener Datentelegramme zugewiesen. Zweckmäßig wird in diesen Zeitschlitzen auch die Richtungsinformation übertragen. Für die Durchführung eines vollständigen Meßzyklus bieten sich mehrere Alternativen, die in den Fig. 2 und 3 dargestellt sind.

Fig. 2 zeigt ein Zeitdiagramm, in dem die Abstrahlung von Funksignalen in mehrere Richtungen in einem Zeitschlitz erfolgt. Hierdurch gelingt es, die Werte für die Ausrichtung von Fahrzeugen schnell zu erhalten und in jedem Zeitschlitz, der demselben Fahrzeug erneut zugewiesen wird, zu aktualisieren.

Eine andere Alternative zeigt Fig. 3. Dort ist ein Zeitdiagramm dargestellt, in dem die Abstrahlung von Funksignalen in mehrere Richtungen in mehreren aufeinanderfolgenden Zeitschlitzen erfolgt. Dadurch steht mehr Zeit für Auswertung zur Verfügung. Dies ist besonders dann vorteilhaft, wenn zusätzlich zur Bestimmung der Ausrichtung der Fahrzeuge auch noch eine Richtungsbestimmung der einfallenden Funksignale vorgenommen wird.

Diese letztgenannte Maßnahme kann so durchgeführt werden, daß beim Empfang der Funksignale alle Richtantennen 14, 16, 18 und 20̸ benutzt werden und die Dämpfungsglieder 22, 24, 26 und 28 zeitversetzt periodisch angesteuert werden. Mittels der Verknüpfungsschaltung bzw. dem Vergleicher werden dann durch Vergleich der sich ändernden Antennenspannungen untereinander und/oder mit einer Referenzspannung Richtungswerte ermittelt.

Wird die Richtungsbestimmung der einfallenden Funksignale und die Bestimmung der relativen Ausrichtung der Fahrzeuge 10̸, 12 gleichzeitig durchgeführt, so ist es erforderlich, die periodische Dämpfung der Antennenspannungen mit einer anderen Frequenz vorzunehmen als die Steuerung der Abstrahlrichtung.

Mittels ergänzender Baugruppen, die in Fig. 1 gestrichelt dargestellt sind, läßt sich die Richtungsbestimmung der einfallenden Funksignale zusätzlich zur Bestimmung der relativen Ausrichtung der Fahrzeuge 10̸, 12 vornehmen. Bei diesen Baugruppen handelt es sich um einen weiteren Oszillator 50̸, der auf der im Vergleich zur Steuerfrequenz f₁ für die Abstrahlrichtungen höheren Frequenz f₂ arbeitet. Außerdem ist eine weitere Verknüpfungsschaltung 52 bzw. ein Vergleicher 52 vorgesehen. Beim Empfang steuert der weitere Oszillator 50̸ sowohl die elektronischen Dämpfungsglieder 22, 24, 26 und 28 als auch die weitere Verknüpfungsschaltung 52 bzw. den Vergleicher 52 an. Zwischen dem AM-Demodulator 36 und den anderen Eingängen der Verknüpfungsschaltungen 38, 52 bzw. der Vergleicher 38, 52 sind Filter 54, 56 angeordnet, die nur die für die jeweilige Verknüpfungsschaltung bzw. den jeweiligen Vergleicher bestimmte Frequenzkomponenten durchlassen und die anderen sperren.

Zur Durchführung der Richtungsbestimmung einfallender Funksignale erzeugt der Oszillator 50̸ eine Steuerspannung entsprechend einer Zeitfunktion, z. B. einer Sinusfunktion. Die Amplitude der Steuerspannung kann so gewählt werden, daß durch die Dämpfung die Antennenspannung nur um maximal 10̸ % vermindert wird. Durch diesen geringen Modulationsgrad wird eine Beeinträchtigung des Datenempfangs sicher verhindert.

Die Steuerspannung liegt mit der entsprechenden Phasenverschiebung ƒ an allen elektronischen Dämpfungsgliedern 22, 24, 26, 28 an. Alle Antennen 14, 16, 18, 20̸ erzeugen einen Beitrag zur Summenspannung. Durch die periodische Dämpfung der Dämpfungsglieder 22, 24, 26, 28 schwankt der Summenverlauf aller Antennenspannungen und damit auch der Verlauf der Regelspannung AGC im Takte der Steuerspannung. Sofern das Funksignal in Strahlungsrichtung der ersten Antenne 14 einfällt, ist die periodische Regelspannung AGC phasengleich mit der Steuerspannung Usₜ₁ des Oszillators 50̸, die sich gleichzeitig als Referenzspannung U_{Ref2} eignet.

Je mehr der Einfallswinkel von dieser Richtung jedoch im Sinne einer Rechtsdrehung abweicht, desto größer wird die Phasenverschiebung zwischen der periodischen Regelspannung AGC und der Steuerspannung U_{St1} des Oszillators 50̸. Durch Ausbildung der Verknüpfungsschaltung 52 bzw. des Vergleichers 52 als Phasenvergleicher läßt sich eine Ausgangsspannung U_{R} erzeugen, die unmittelbar ein Maß für den Richtungswert β darstellt.

## Patentansprüche

1. Verfahren zur Bestimmung der relativen Ausrichtung von Fahrzeugen (10, 12) im Straßenverkehr durch Ausstrahlung, Empfang und Auswertung von Funksignalen (1,2,3,4), die über Sendeantennen (14,16,18,20) dieser Fahrzeuge (10, 12) an das Umfeld gerichtet sind, wobei die mit Richtungsinformationen über die Abstrahlrichtungen modulierten Funksignale (1,2,3,4) in unterschiedliche Richtungen vom Fahrzeug (10) zeitversetzt und periodisch mit einer Frequenz f1 gedämpft abgestrahlt werden und wobei die Empfangsfeldstärken dieser Funksignale zusammen mit ihren Richtungsinformationen ausgewertet werden, und bei dem zusätzlich die Einfallsrichtung der Funksignale bestimmt wird, indem die von den als Richtantennen ausgebildeten und in unterschiedliche Richtungen ausgerichteten Antennen gelieferten Antennenspannungen mittels einer Steuerspannung V_{ref2} zeitversetzt periodisch gedämpft werden dadurch gekennzeichnet, daß die empfangenen Antennenspannungen gemeinsam einem Empfänger zugeführt werden und deren Summenspannung mit der Steuerspannung V_{ref2} verglichen und durch den Vergleich ein Richtungswert (β) ermittelt wird, wobei die periodische Dämpfung der empfangenen Antennenspannungen mit einer anderen Frequenz f2 vorgenommen wird als die Frequenz f1 der Umschaltung der Abstrahlrichtungen.

2. Verfahren nach Anspruch 1, dadurch gekennzeichnet, daß die Funksignale in mindestens zwei, vorzugsweise vier Rlchtungen, und zwar nach vorn, zur rechten Seite, nach hinten und zur linken Seite verstärkt abgestrahlt werden.

3. Verfahren nach Anspruch 1 oder 2, dadurch gekennzeichnet, daß die Funksignale unter Öffnungswinkeln abgestrahlt werden, die sich insgesamt zu einer Rundstrahlcharakteristik ergänzen.

4. Verfahren nach einem oder mehreren der Ansprüche 1 bis 3, dadurch gekennzeichnet, daß die Richtungsinformationen ein Synchronsignal umfaßt, das einen Meßzyklus einleitet, in dem in vorgegebener Reihenfolge und zu vorgegebenen Zeiten das Funksignal nacheinander in alle Abstrahlrichtungen verstärkt abgestrahlt wird.

5. Verfahren nach einem oder mehreren der Ansprüche 1 bis 4, dadurch gekennzeichnet, daß die Aussendung der Richtungsinformationen in Zeitschlitzen vorgenommen wird, die dem jeweiligen Fahrzeug für eine Datenübertragung zugewiesen sind.

6. Verfahren nach Anspruch 5, dadurch gekennzeichnet, daß die Funksignale innerhalb des Zeitschlitzes wenigstens einmal in alle Richtungen verstärkt abgestrahlt werden.

7. Verfahren nach Anspruch 5 dadurch gekennzeichnet, daß die Funksignale innerhalb eines Zeitschlitzes nur in eine Richtung verstärkt abgestrahlt werden und für einen vollständigen Umlauf mehrere aufeinanderfolgende Zeitschlitze ausgewertet werden.

8. Vorrichtung zur Bestimmung der relativen Ausrichtung von Fahrzeugen im Straßenverkehr durch Ausstrahlung, Empfang und Auswertung von Funksignalen (1,2,3,4), die von diesen Fahrzeugen (10) über Sender (32) mit als Richtantennen ausgebildeten und in unterschiedliche Richtungen ausgerichteten Sendeantennen (14, 16, 18, 20) an das Umfeld gerichtet sind, wobei die Funksignale (1,2,3,4) zeitversetzt und periodisch mit der Frequenz f1 gedämpft und mit Richtungsinformationen über die Abstrahlrichtungen moduliert sind, und daß ein Empfänger (32) mit einer Auswerteeinrichtung (34, 36, 38, 40, 48) für die Empfangsfeldstärken dieser Funksignale zusammen mit ihren Richturgsinformationen vorgesehen ist, und bei der zur zusätzlichen Bestimmung der Richtung einfallender Funksignale auch die Empfangsantennen (14, 16, 18, 20̸) als Richtantennen ausgebildet und in unterschliedliche Richtungen ausgerichtet sind dadurch gekennzeichnet, daß Dämpfungsglieder (22, 24, 26, 28) für die von den Antennen (14, 16, 18, 20̸) gelieferten Antennenspannungen vorgesehen sind, die mittels einer Steuerspannung V_{ref2} zeitversetzt periodisch ansteuerbar sind und daß die Antennenspannungen gemeinsam dem Empfänger (32) zugeführt sind, welcher einen Vergleicher (52) für die Summenspannung mit der Steuerspannung (U_{Ref2}) zur Ermittlung eines Richtungswertes (β) umfaßt, wobei sich die Frequenz f2 der periodische Dämpfung der Antennenspannungen von der Frequenz f1 unterscheidet, mit der die Umschaltung der Abstrahlrichtungen erfolgt, daß die Empfänger (32) ausgebildet sind, mittels einer Referenzspannung einen Richtungswert zu ermitteln, wobei die periodische Dämpfung der empfangenen Antennenspannungen mit einer anderen Frequenz vorgenommen wird als die Umschaltung der Abstrahlrichtungen.

9. Vorrichtung nach Anspruch 8, dadurch gekennzeichnet, daß die Sendeantennen (14, 16, 18, 20̸) in vier Richtungen, und zwar nach vorn, zur rechten Seite, nach hinten und zur linken Seite ausgerichtet sind.

10. Vorrichtung nach Anspruch 8 oder 9, dadurch gekennzeichnet, daß die Strahlungsdiagramme der Sendeantennen (14, 16, 18, 20) Öffnungswinkel aufweisen, die sich insgesamt zu einer Rundstrahlcharakteristik ergänzen.

11. Vorrichtung nach einem oder mehreren der Ansprüche 8 bis 10, dadurch gekennzeichnet, daß die Richtungsinformationen ein Synchronsignal zur Einleitung eines Meßzyklus umfaßt, in dem mittels einer Steuerung (22, 24, 26, 28, 40̸) die Abstrahlung des Funksignals in vorgegebener Reihenfolge zu vorgegebenen Zeiten über die Sendeantennen (14, 16, 18, 20̸) steuerbar ist.

12. Vorrichtung nach einem oder mehreren der Ansprüche 8 bis 12, dadurch gekennzeichnet, daß der Aussendung der Richtungsinformationen Zeitschlitze zugewiesen sind, die auch dem jeweiligen Fahrzeug für eine Datenübertragung zugeordnet sind.

13. Vorrichtung nach Anspruch 12, dadurch gekennzeichnet, daß ein vollständiger Meßzyklus, in dem Funksignale einmal in alle Richtungen abgestrahlt werden, innerhalb eines Zeitschlitzes liegt.

14. Vorrichtung nach Anspruch 12, dadurch gekennzeichnet, daß ein vollständiger Meßzyklus, in dem Funksignale einmal in alle Richtungen abgestrahlt werden, auf mehrere aufeinanderfolgende Zeitschlitze gedehnt ist.

15. Vorrichtung nach Anspruch 8, dadurch gekennzeichnet, daß die Antennen (14, 16, 18, 20̸) wechselweise als Sendeantennen und Empfangsantennen umschaltbar sind.

## Claims

1. Method for determining the relative orientation of vehicles (10, 12) in road traffic by broadcasting, receiving and evaluating radio signals (1, 2, 3, 4) which are directed to the surroundings by means of transmission antennas (14, 16, 18, 20) of these vehicles (10, 12), the radio signals (1, 2, 3, 4) which are modulated with direction information relating to the broadcasting directions being broadcast from the vehicle (10) in different directions with staggered timing and periodically damped with a frequency f1, and the reception fields strengths of these radio signals being evaluated together with their direction information and in which in addition the direction of incidence of the radio signals is determined in that the antenna voltages supplied by the antennas which are constructed as directional antennas and oriented in different directions are periodically damped with staggered timing by means of a control voltage V_{Ref2}, characterized in that the received antenna voltages are fed together to a receiver and their total voltages are compared with the control voltage V_{Ref2} and a directional value (β) is determined by means of the comparison, the periodic damping of the received antenna voltages being carried out at a different frequency f2 from the frequency fl of the switching over the broadcasting directions.

2. Method according to Claim 1, characterized in that the radio signals are broadcast, in amplified form, in at least two, preferably four directions, specifically forwards, to the right, to the rear and to the left.

3. Method according to Claim 1 or 2, characterized in that the radio signals are broadcast at apertures which complement one another overall to form an omnidirectional characteristic.

4. Method according to one or more of Claims 1 to 3, characterized in that the direction information comprises a synchronous signal which initiates a measurement cycle in which, in a prescribed sequence and at prescribed times, the radio signal is successively broadcast, in amplified form, in all the broadcasting directions.

5. Method according to one or more Claims 1 to 4, characterized in that the broadcasting of the direction information is performed in time slots which are allocated to the respective vehicle for a data transmission.

6. Method according to Claim 5, characterized in that, within the time slot, the radio signals are broadcast, in amplified form, at least once in all directions.

7. Method according to Claim 5, characterized in that, within one time slot, the radio signals are broadcast, in amplified form, in one direction only and a plurality of successive time slots are evaluated for one complete rotation.

8. Apparatus for determining the relative orientation of vehicles in road traffic by broadcasting, receiving and evaluating radio signals (1, 2, 3, 4) which are directed to the surroundings from these vehicles (10) by means of transmitters (32) with transmission antennas (14, 16, 18, 20) which are constructed as directional antennas and are oriented in different directions, the radio signals (1, 2, 3, 4) being damped with staggered timing and periodically with the frequency f1 and being modulated with direction information with relation to the broadcasting directions, and in that a receiver (32) with an evaluation apparatus (34, 36, 38, 40, 48) for the reception field strengths of these radio signals together with their direction information is provided, and in which, for the additional determination of the direction of incident radio signals, the reception antennas (14, 16, 18, 20) are also constructed as directional antennas and are oriented in different directions, characterized in that damping elements (22, 24, 26, 28) are provided for the antenna voltages which are supplied by the antennas (14, 16, 18, 20), which damping elements (22, 24, 26, 28) can be actuated periodically with staggered timing by means of a control voltage V_{Ref2}, and in that the antenna voltages are fed together to the receiver (32) which comprises a comparator (52) for the total voltage with the control voltage (Up.f2) in order to determine a direction value (β), the frequency f2 of the periodic damping of the antenna voltages differing from the frequency f1 at which the switching of the broadcasting directions takes place, in that the receivers (32) are designed to determine a direction value by means of a reference voltage, the periodic damping of the received antenna voltages being carried out at a different frequency from the switching over of the broadcasting directions.

9. Apparatus according to Claim 8, characterized in that the transmission antennas (14, 16, 18, 20) are oriented in four directions, specifically forwards, to the right, to the rear and to the left.

10. Apparatus according to Claim 8 or 9, characterized in that the radiation diagrams of the transmission antennas (14, 16, 18, 20) have apertures which complement one another overall to form an omnidirectional characteristic.

11. Apparatus according to one or more of Claims 8 to 10, characterized in that the direction information comprises a synchronous signal for initiating a measurement cycle in which the broadcasting of the radio signal via the transmission antennas (14, 16, 18, 20) in a prescribed sequence at prescribed times can be controlled by means of a control (22, 24, 26, 28, 40).

12. Apparatus according to one or more Claims 8 to 11, characterized in that time slots are allocated to the transmission of the direction information and are also assigned to the respective vehicle for a data transmission.

13. Apparatus according to Claim 12, characterized in that one complete measurement cycle in which radio signals are broadcast once in all directions lies within one time slot.

14. Apparatus according to Claim 12, characterized in that one complete measurement cycle in which radio signals are broadcast once in all directions is extended over a plurality of successive time slots.

15. Apparatus according to Claim 8, characterized in that the antennas (14, 16, 18, 20) can be switched over alternately as transmission antennas or reception antennas.

## Revendications

1. Procédé pour déterminer l'orientation relative de véhicules (10, 12) en circulation routière par l'émission, réception et exploitation de signaux radio (1, 2, 3, 4) émis par des antennes d'émission (14, 16, 18, 20) de ces véhicules (10, 12), dirigées vers le champ environnant, les signaux radio (1, 2, 3, 4) modulés par des informations directionnelles suivant les directions d'émission étant émis dans des différentes directions du véhicule (10), avec un décalage dans le temps et un amortissement périodique selon une fréquence (f1), procédé suivant lequel l'intensité des champs de réception de ces signaux radio ainsi que leurs informations directionnelles sont exploitées et suivant lequel en plus on détermine la direction d'incidence des signaux radio en amortissant périodiquement les tensions d'antenne fournies par les antennes en forme d'antennes directionnelles alignées dans des directions différentes, avec un décalage dans le temps à l'aide d'une tension de commande (URef2), procédé caractérisé en ce que les tensions d'antenne reçues sont appliquées en commun à un récepteur et leur tension somme est comparée à la tension de commande (URef2) et à partir de la comparaison on détermine une valeur directionnelle (β), l'amortissement périodique des tensions d'antenne reçues se faisant à une autre fréquence (f2) que la fréquence (f1) de la commutation des directions d'émission.

2. Procédé selon la revendication 1, caractérisé en ce que les signaux radio sont émis de façon amplifiée dans au moins deux et de préférence quatre directions, à savoir vers l'avant, vers le côté droit, vers l'arrière et vers le côté gauche.

3. Procédé selon la revendication 1 ou 2, caractérisé en ce que les signaux radio sont émis avec des angles d'ouverture qui se complètent globalement pour donner une caractéristique d'émission circulaire.

4. Procédé selon l'une ou plusieurs des revendications 1 à 3, caractérisé en ce que les informations directionnelles comprennent un signal de synchronisation qui commence un cycle de mesure au cours duquel, dans un ordre prédéterminé et à des instants prédéterminés, on émet successivement le signal radio, de façon amplifiée dans toutes les directions d'émission.

5. Procédé selon une ou plusieurs des revendications 1 à 4, caractérisé en ce que l'émission des informations directionnelles se fait dans des fenêtres de temps attribuées à chaque véhicule pour une transmission de données.

6. Procédé selon la revendication 5, caractérisé en ce que les signaux radio sont émis à l'intérieur d'une fenêtre de temps, au moins une fois de façon amplifiée dans toutes les directions.

7. Procédé selon la revendication 5, caractérisé en ce que les signaux radio sont émis de manière amplifiée dans une fenêtre de temps seulement dans une direction et pour une rotation complète on exploite plusieurs fenêtres de temps successives.

8. Dispositif pour déterminer l'orientation relative de véhicules en circulation routière par l'émission, la réception et l'exploitation de signaux radio (1, 2, 3, 4) émis par les véhicules (10) par des émetteurs (32) avec des antennes directionnelles et des antennes de réception (14, 16, 18, 20) alignées dans des directions différentes, par rapport au champ environnant, les signaux radio (1, 2, 3, 4) étant amortis de manière décalée dans le temps et de façon périodique à la fréquence (f1) et modulés par des informations directionnelles concernant les directions d'émission ainsi qu'un récepteur (32) avec un circuit d'exploitation (34, 36, 38, 40, 48) pour les intensités des champs de réception de ces signaux radio avec leurs informations directionnelles et en ce que pour déterminer en plus la direction des signaux radio incidents, les antennes de réception (14, 16, 18, 20) sont également réalisées comme antennes directionnelles et sont alignées dans des directions différentes, caractérisé en ce que des éléments d'amortissement (22, 24, 26, 28) sont prévus pour les tensions d'antenne fournies par les antennes (14, 16, 18, 20), commandées périodiquement de manière décalée par une tension de commande (URef2) et les tensions d'antenne sont appliquées en commun au récepteur (32) comprenant un comparateur (52) pour la tension de somme avec la tension de commande (URef2), pour déterminer un angle de direction (β), la fréquence (f2) de l'amortissement périodique des tensions d'antenne étant différente de la fréquence (f1) à laquelle se fait la commutation des directions d'émission, et les récepteurs (32) sont réalisés de façon qu'avec une tension de référence ils déterminent une valeur directionnelle, l'amortissement périodique des tensions d'antenne reçues étant fait avec une fréquence autre que la commutation des directions d'émission.

9. Dispositif selon la revendication 8, caractérisé en ce que les antennes d'émission (14, 16, 18, 20) sont alignées dans quatre directions, à savoir vers l'avant, vers le côté droit, vers l'arrière et vers le côté gauche.

10. Dispositif selon la revendication 8 ou 9, caractérisé en ce que les diagrammes d'émission des antennes d'émission (14, 16, 18, 20) ont des angles d'ouverture qui se complètent pour avoir une caractéristique d'émission circulaire.

11. Dispositif selon une ou plusieurs des revendications 8 à 10, caractérisé en ce que les informations directionnelles comprennent un signal de synchronisation pour commencer un cycle de mesure à l'aide duquel une commande (22, 24, 26, 28, 40) commande l'émission du signal radio dans un ordre prédéterminé à des instants prédéterminés par les antennes d'émission (14, 16, 18, 20).

12. Dispositif selon l'une ou plusieurs des revendications 8 à 12, caractérisé en ce que l'émission des informations directionnelles se fait dans des fenêtres de temps qui sont également associées aux véhicules respectifs pour une transmission de données.

13. Dispositif selon la revendication 12, caractérisé en ce qu'un signe de mesure complet, au cours duquel on émet une fois les signaux radio dans toutes les directions, se situe à l'intérieur d'une fenêtre de temps.

14. Dispositif selon la revendication 12, caractérisé en ce qu'un cycle de mesure complet au cours duquel les signaux radio sont émis une fois dans toutes les directions s'étend sur plusieurs fenêtres de temps successives.

15. Dispositif selon la revendication 8, caractérisé en ce que les antennes (14, 16, 18, 20) sont commutées alternativement comme antennes d'émission et comme antennes de réception.
